# EUROPEAN PATENT APPLICATION

(11) **EP 4 622 387 A1**
(43) Date of publication of application: **24.09.2025**
(21) Application number: 23910264.3
(22) Date of filing: 19.12.2023
(51) Int. Cl.: H04W 76/15, A63B 71/06, A63F 13/30

(54) **MULTI-ELECTRONIC-DEVICE INTERACTION METHOD AND SYSTEM, AND ELECTRONIC DEVICE**

(30) Priority: 29.12.2022 CN 202211710210
(71) Applicant: Huawei Technologies Co., Ltd., Shenzhen, Guangdong 518129 (CN)
(72) Inventor: DING, Liang, Shenzhen, Guangdong 518129 (CN)
(74) Representative: MERH-IP Matias Erny Reichl Hoffmann Patentanwälte PartG mbB
(86) International application number: PCT/CN2023/139864
(87) International publication number: WO 2024/140334

(57) **Abstract**

Embodiments of this application relate to the field of terminal technologies, and provide a multi-electronic device interaction method and system, and an electronic device, so that a distance between electronic devices used by users participating in a competition is not limited by a communication range. In the method, a first device sends competition information to a second device through a first communication connection. The second device disconnects the first communication connection to the first device after receiving the competition information sent by the first device. The first device detects first data based on the competition information, and sends the first data to a server. The second device detects second data based on the competition information, and sends the second data to the server. The server obtains a competition result based on the first data and the second data, and sends the competition result to the first device and the second device. This application is applied to a process in which a user competes with another user by using a multi-player competition function of an electronic device.

## Description

This application claims priority to Chinese Patent Application No. 202211710210.0, filed with the China National Intellectual Property Administration on December 29, 2022 and entitled "MULTI-ELECTRONIC DEVICE INTERACTION METHOD AND SYSTEM, AND ELECTRONIC DEVICE", which is incorporated herein by reference in its entirety.

### TECHNICAL FIELD

This application relates to the field of terminal technologies, and in particular, to a multi-electronic device interaction method and system, and an electronic device.

### BACKGROUND

With development of electronic technologies and a mobile internet, a user may have more electronic devices such as a mobile phone, a tablet computer, a personal computer (personal computer, PC), and a wearable device. The electronic device has a plurality of functions, for example, a multi-player competition function.

The user may compete with another user by using the multi-player competition function of the electronic device. In a process in which the user competes with the another user, electronic devices used by the users participating in the competition are connected to each other in a short-range communication manner. The electronic devices share competition data of the users, and autonomously determine a competition result based on the shared competition data.

However, because a communication range of the short-range communication manner is limited, when the electronic devices implement the multi-player competition function, a distance between the electronic devices needs to be always kept within the communication range.

### SUMMARY

Embodiments of this application provide a multi-electronic device interaction method and system, and an electronic device, so that a distance between electronic devices used by users participating in a competition is not limited by a communication range.

To achieve the foregoing objectives, the following technical solutions are used in embodiments of this application.

According to a first aspect, a multi-electronic device interaction method is provided. The method includes:

A first device sends competition information to a second device through a first communication connection. The competition information includes at least one of a competition item and competition time. The competition time includes competition start time. The second device disconnects the first communication connection to the first device after receiving the competition information sent by the first device. The first device detects first data based on the competition information, and sends the first data to a server. The second device detects second data based on the competition information, and sends the second data to the server. After receiving the first data and the second data, the server obtains a competition result based on the first data and the second data. The server separately sends the competition result to the first device and the second device.

In the foregoing electronic device interaction method, the first communication connection between the first device and the second device is retained only when the first device sends the competition information to the second device, so that a distance between the first device and the second device is not limited by a communication range. In addition, power consumption of each electronic device in a user competition process can be reduced.

In a possible implementation of the first aspect, the first device receives a first instruction input by a user. The first instruction instructs the first device to send a first connection request to at least one second device. The first connection request is used to request the second device to establish the first communication connection to the first device. The second device displays a first connection interface in response to the received first connection request. The first connection interface is used to prompt the user to agree to establish the first communication connection between the second device and the first device. The second device receives a connection instruction input by the user, and establishes the first communication connection to the first device in response to the connection instruction.

In this implementation, after the first device successfully establishes the first communication connection to the second device, the first device may interact with the second device through the first communication connection.

In a possible implementation of the first aspect, the first device receives the competition result sent by the server, and displays a settlement interface including the competition result; and/or the second device receives the competition result sent by the server, and displays a settlement interface including the competition result.

In this implementation, the settlement interface displayed by the first device and/or the second device may include the competition result sent by the server. For example, the settlement interface includes a winning/losing status of each user participating in a competition; and/or the settlement interface includes the first data and the second data; and/or the settlement interface includes a competition ranking status of each user participating in the competition, and the like. The settlement interface displayed by the first device and/or the second device may intuitively prompt the user with the competition result of the competition that the user participates in.

In an implementation of the first aspect, after the first device detects the first data based on the competition information, the first device establishes a second communication connection to the server. After detecting the second data based on the competition information, the second device establishes a third communication connection to the server.

In this implementation, after detecting the first data, the first device establishes the second communication connection to the server, so that power consumption of the first device before the first data is detected can be reduced. Correspondingly, after detecting the second data, the second device establishes the third communication connection to the server, so that power consumption of the second device before the second data is detected can be reduced.

In an implementation of the first aspect, the first communication connection includes at least one of a Bluetooth connection, an infrared connection, and a ZigBee communication connection.

According to a second aspect, a multi-electronic device interaction method is provided. The method may be applied to a first device. In the method, the first device sends competition information to a second device through a first communication connection. After disconnecting the first communication connection to the second device, the first device detects first data based on the competition information, and sends the first data to the server. The first device receives a competition result sent by the server. The competition result is obtained by the server based on the first data and second data. The second data is obtained by the second device through detection based on the competition information.

In the foregoing electronic device interaction method, the first communication connection between the first device and the second device is retained only when the first device sends the competition information to the second device, so that a distance between the first device and the second device is not limited by a communication range. In addition, power consumption of the first device in a user competition process can be reduced.

In an implementation of the second aspect, the first device receives a first instruction input by a user, where the first instruction instructs the first device to send a first connection request to at least one second device. The first connection request is used to request the second device to establish the first communication connection to the first device.

In this implementation, after the first device successfully establishes the first communication connection to the second device, the first device may interact with the second device through the first communication connection.

According to a third aspect, a multi-electronic device interaction method is provided. The method may be applied to a second device. In the method, the second device disconnects the first communication connection to the first device after receiving competition information sent by a first device through a first communication connection. The second device detects second data based on the competition information, and sends the second data to a server. The second device receives a competition result sent by the server. The competition result is obtained by the server based on first data and the second data. The first data is obtained by the first device through detection based on the competition information.

In the foregoing multi-electronic device interaction method, the first communication connection between the first device and the second device is retained only when the first device sends the competition information to the second device, so that a distance between the first device and the second device is not limited by a communication range. In addition, power consumption of the second device in a user competition process can be reduced.

In a possible implementation of the third aspect, the second device receives a first connection request sent by the first device. The first connection request is used to request the second device to establish the first communication connection to the first device. The second device displays a first connection interface in response to the first connection request. The first connection interface is used to prompt the user to agree to establish the first communication connection between the second device and the first device. The second device receives a connection instruction input by the user, and establishes the first communication connection to the first device in response to the connection instruction.

In this implementation, after the second device successfully establishes the first communication connection to the first device, the second device may interact with the first device through the first communication connection.

According to a fourth aspect, a multi-electronic device interaction system is provided. The multi-electronic device interaction system includes a first device, at least one second device, and a server. The multi-electronic device interaction system may implement the method according to the foregoing aspects and any one of the possible implementations of the foregoing aspects.

According to a fifth aspect, this application provides an electronic device, including a memory and one or more processors. The memory is coupled to the processor, the memory stores computer program code, and the computer program code includes computer instructions. When the computer instructions are executed by the processor, the electronic device is enabled to perform the method according to the first aspect and any one of the possible design manners of the first aspect.

According to a sixth aspect, this application provides a computer storage medium. The computer storage medium includes computer instructions, and when the computer instructions are run on an electronic device, the electronic device is enabled to perform the method according to the first aspect and any one of the possible design manners of the first aspect.

According to a seventh aspect, this application provides a computer program product. When the computer program product runs on a computer, the computer is enabled to perform the method according to the first aspect and any one of the possible design manners of the first aspect.

It may be understood that, for beneficial effect that can be achieved by the multi-electronic device interaction system according to the fourth aspect and any one of the possible design manners of the fourth aspect, the electronic device according to the fifth aspect and any one of the possible design manners of the fifth aspect, the computer storage medium according to the sixth aspect, and the computer program product according to the seventh aspect, refer to beneficial effect in the first aspect and any one of the possible design manners of the first aspect, or refer to beneficial effect in the second aspect and any one of the possible designs of the second aspect, or refer to beneficial effect in the third aspect and any one of the possible designs of the third aspect. Details are not described herein again.

### BRIEF DESCRIPTION OF DRAWINGS

FIG. 1 is a diagram of a structure of a multi-electronic device interaction system according to an embodiment of this application;
FIG. 2 is a diagram of a hardware structure of an electronic device according to an embodiment of this application;
FIG. 3 is a diagram of interaction in a multi-electronic device interaction method according to an embodiment of this application;
FIG. 4A(1) and FIG. 4A(2) are a diagram of a first application display interface according to an embodiment of this application;
FIG. 4B is a diagram of a competition item setting interface according to an embodiment of this application;
FIG. 5 is a diagram of a first search list according to an embodiment of this application;
FIG. 6A and FIG. 6B are a diagram of a first connection interface according to an embodiment of this application;
FIG. 7A(1) and FIG. 7A(2) are a diagram of a second application display interface according to an embodiment of this application;
FIG. 7B is a diagram of a second search list according to an embodiment of this application;
FIG. 8A and FIG. 8B are a diagram of a second connection interface according to an embodiment of this application;
FIG. 9A and FIG. 9B are a diagram of a first prompt interface and a second prompt interface according to an embodiment of this application;
FIG. 10 is a diagram of a user interface according to an embodiment of this application;
FIG. 11 is a diagram of a first waiting interface according to an embodiment of this application;
FIG. 12 is a diagram of a settlement interface according to an embodiment of this application;
FIG. 13 is a diagram of another settlement interface according to an embodiment of this application; and
FIG. 14 is a diagram of a structure of an electronic device according to an embodiment of this application.

### DESCRIPTION OF EMBODIMENTS

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

An electronic device has a plurality of functions, for example, a message receiving and sending function, a multimedia playing function, and a multi-person competition function. A user may compete with another user by using the multi-player competition function of the electronic device.

In a related technology, an electronic device of a user participating in a competition needs to always establish a communication connection to a server, and upload competition data to the server in real time, to determine a competition result by using the server. For example, a user A may compete with a user B to determine who can first complete rope jumping for 100 times. In a competition process between the user A and the user B, an electronic device of the user A and an electronic device of the user B may send competition data of the user A and the user B to the server in real time. The server monitors, in real time based on the received competition data, whether the user A or the user B first complete rope jumping for 100 times, to determine a competition result.

However, in the competition process between the user A and the user B, both the electronic device of the user A and the electronic device of the user B need to interact with the server in real time. This depends on stability of a communication connection between each electronic device and the server.

In another related technology, electronic devices of users participating in a competition may be connected to each other in a short-range communication manner (for example, through a Bluetooth connection). In a competition process, an electronic device of each user may send competition data of the user to another electronic device in real time, and each electronic device may determine a competition result based on the received competition data. For example, a user A may compete with a user B to determine who can first complete rope jumping for 100 times. In a competition process between the user A and the user B, an electronic device of the user A may be connected to an electronic device of the user B through Bluetooth. The electronic device of the user A may send competition data of the user A to the electronic device of the user B in real time. The electronic device of the user B may determine a competition result based on the received competition data of the user A and detected competition data of the user B. Correspondingly, the electronic device of the user B may also send the competition data of the user B to the electronic device of the user A in real time. The electronic device of the user A may determine the competition result based on the received competition data of the user B and the detected competition data of the user A.

However, because a communication range of a short-range communication manner is limited (for example, the communication range is 500 m), in a competition process between the user A and the user B, a distance between the user A and the user B needs to be always kept within the communication range. Otherwise, a communication connection between the electronic device of the user A and the electronic device of the user B is disconnected, and the competition cannot be completed.

Based on the foregoing content, an embodiment of this application provides a multi-electronic device interaction method, so that a distance between electronic devices used by users participating in a competition is not limited by a communication range.

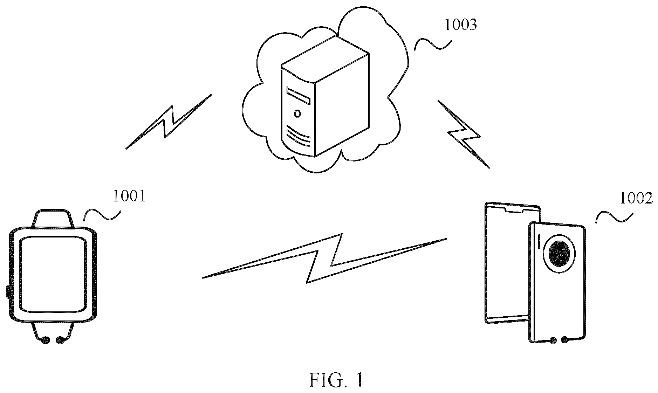

In some embodiments, the multi-electronic device interaction method provided in this application may be applied to a multi-electronic device interaction system. Refer to FIG. 1. The multi-electronic device interaction system provided in this embodiment of this application includes a first device (for example, a smartwatch 1001), at least one second device (for example, a mobile phone 1002), and a server 1003.

In some embodiments, the first device and the second device separately establish communication connections to the server. The communication connection may be a wireless communication connection. A wireless communication technology for establishing the wireless communication connection includes but is not limited to at least one of the following: a wireless local area network (wireless local area network, WLAN) (for example, a wireless fidelity (wireless fidelity, Wi-Fi) network), Bluetooth (Bluetooth, BT), (for example, conventional Bluetooth or Bluetooth low energy (Bluetooth low energy, BLE)), near field communication (near field communication, NFC), ZigBee (ZigBee), frequency modulation (frequency modulation, FM), infrared (infrared, IR), and the like.

In some embodiments, a communication connection is also established between the first device and each second device. The communication connection may be a wireless communication connection. A wireless communication technology for establishing the wireless communication connection includes but is not limited to at least one of the following: a wireless local area network (wireless local area network, WLAN) (for example, a wireless fidelity (wireless fidelity, Wi-Fi) network), Bluetooth (Bluetooth, BT), (for example, conventional Bluetooth or Bluetooth low energy (Bluetooth low energy, BLE)), near field communication (near field communication, NFC), ZigBee (ZigBee), frequency modulation (frequency modulation, FM), infrared (infrared, IR), and the like.

In some embodiments, after the first device establishes the communication connection to the second device, the first device may send competition information to the second device. The second device disconnects the communication connection to the first device after receiving the competition information sent by the first device. Then, the first device may detect first data based on the competition information, and sends the first data to the server. The first data is competition data of a user who uses the first device. The second device may detect second data based on the competition information, and send the second data to the server. The second data is competition data of a user who uses the second device. Correspondingly, the server may receive the first data sent by the first device and the second data sent by the second device. Then, the server may obtain a competition result based on the first data and the second data, and separately send the competition result to the first device and the second device.

It can be learned that, in the multi-electronic device interaction method provided in this embodiment of this application, in the competition process of electronic devices, the electronic devices do not need to interact with the server in real time. The electronic devices also do not need to interact with each other in real time.

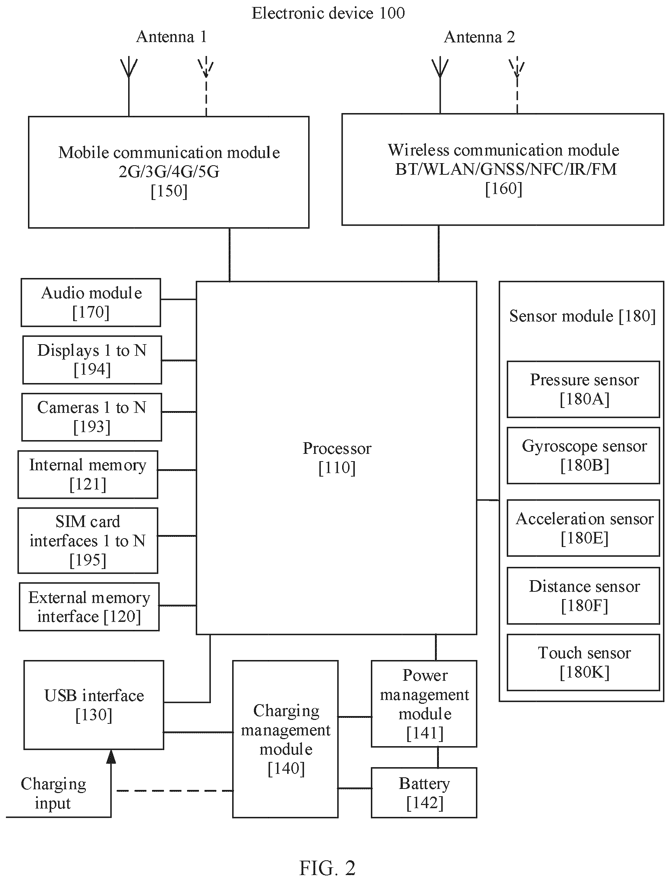

For example, FIG. 2 is a diagram of a hardware structure of an electronic device 100 according to an embodiment of this application. The electronic device 100 may be a first device, or may be a second device.

The first device may include a wearable device like a smartwatch, a smart bracelet, a smart band, or a head-mounted device, or another electronic device having a multi-player competition function, for example, a mobile phone. An operating system installed on the first device includes but is not limited to iOS^{®}, Android^{®}, HarmonyOS^{®}, Windows^{®}, Linux^{®}, or another operating system. A specific type of the first device and the installed operating system are not limited in this application.

The second device may alternatively include a wearable device like a smartwatch, a smart bracelet, a smart band, or a head-mounted device, or another electronic device having a multi-player competition function, for example, a mobile phone. An operating system installed on the first device includes but is not limited to iOS^{®}, Android^{®}, HarmonyOS^{®}, Windows^{®}, Linux^{®}, or another operating system. A specific type of the second device and the installed operating system are not limited in this application.

Refer to FIG. 2. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 140, a sensor module 180, a camera 193, a display 194, a subscriber identity module (subscriber identity module, SIM) card interface 195, and the like. The sensor module 180 may include a pressure sensor 180A, a gyroscope sensor 180B, an acceleration sensor 180E, a distance sensor 180F, a touch sensor 180K, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to a speaker 140A, a receiver 140B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite based augmentation system (satellite based augmentation system, SBAS).

For example, the electronic device 100 may establish a communication connection to another electronic device through the antenna 1, the antenna 2, the mobile communication module 150, the wireless communication module 160, the modem processor, the baseband processor, and the like. The electronic device 100 may alternatively establish a communication connection to a server through the antenna 1, the antenna 2, the mobile communication module 150, the wireless communication module 160, the modem processor, the baseband processor, and the like.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or a phone book) created during use of the electronic device 100, and the like. In addition, the internal memory 121 may include a high-speed random access memory, and may further include a nonvolatile memory, for example, at least one magnetic disk storage device, a flash storage device, and a universal flash storage (universal flash storage, UFS).

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation based on the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a messages application icon, an instruction for viewing an SMS message is performed. When a touch operation whose touch operation intensity is greater than or equal to the first pressure threshold is performed on the messages application icon, an instruction for creating a new SMS message is performed.

The gyroscope sensor 180B may be configured to determine a moving posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The acceleration sensor 180E may detect accelerations of the electronic device 100 in various directions (usually on three axes). When the electronic device 100 is still, a magnitude and a direction of gravity may be detected. The acceleration sensor 180E may be further configured to identify a posture of the electronic device, and is used in an application, for example, switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

In the multi-electronic device interaction method that is in embodiments of this application and that is implemented based on the electronic device shown in FIG. 2, an electronic device used as a first device may establish, by using the antenna 1, the antenna 2, the mobile communication module 150, the wireless communication module 160, the modem processor, the baseband processor, and the like, a communication connection to an electronic device used as a second device. Then, the first device sends competition information to the second device. The competition information includes a competition item, competition time, and the like. After the second device receives the competition information sent by the first device, the processor 110 of the second device controls to disconnect the communication connection to the first device. Then, the processor 110 of the first device may control the sensor module 180 to detect first data based on the competition information, and send the first data to a server. The first data is competition data of a user who uses the first device. The processor 110 of the second device may control the sensor module 180 to detect second data based on the competition information, and send the second data to the server. The second data is competition data of a user who uses the second device. Correspondingly, the server may receive the first data sent by the first device and the second data sent by the second device. Then, the server may obtain a competition result based on the first data and the second data, and separately send the competition result to the first device and the second device. After receiving the competition result sent by the server, the first device and the second device may display the competition result based on the display 194 of the first device and the display 194 of the second device.

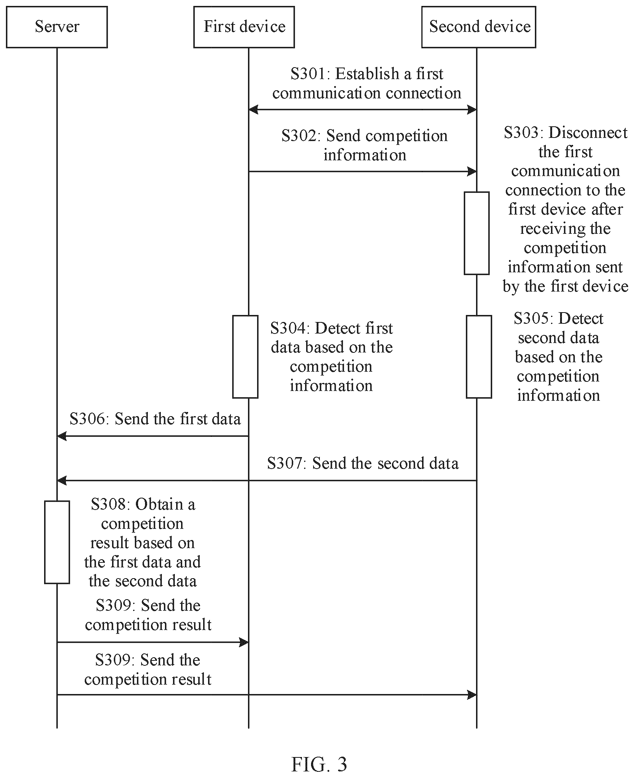

With reference to the multi-electronic device interaction system shown in FIG. 1, the following describes the multi-electronic device interaction method provided in embodiments of this application by using an example in which the multi-electronic device interaction system includes a first device 1001, at least one second device 1002, and a server 1003. FIG. 3 is a diagram of interaction in a multi-electronic device interaction method according to an embodiment of this application. As shown in FIG. 3, the method may include the following steps S301 to S309.

S301: A first device establishes a first communication connection to a second device.

In some embodiments, an application (application, APP) having a multi-player competition function is installed on both the first device and the second device. For ease of description, the app having the multi-player competition function may also be referred to as a competition app for short. The first device and the second device may implement the multi-player competition function by using the competition app.

In some embodiments, the first device is an electronic device that initiates a competition. After initiating the competition, the first device may invite another electronic device to join the competition. For example, the first device invites at least one second device to join the competition.

With reference to the accompanying drawings, the following describes in detail a process in which the first device initiates the competition and invites the at least one second device to join the competition.

The first device may start the competition app in response to an operation input by a user for indicating to start the competition app, and display a first application display interface of the competition app.

The user may set competition information in the first application display interface. The first device may create the competition based on the competition information set by the user. The competition information includes a competition item, competition time, and the like.

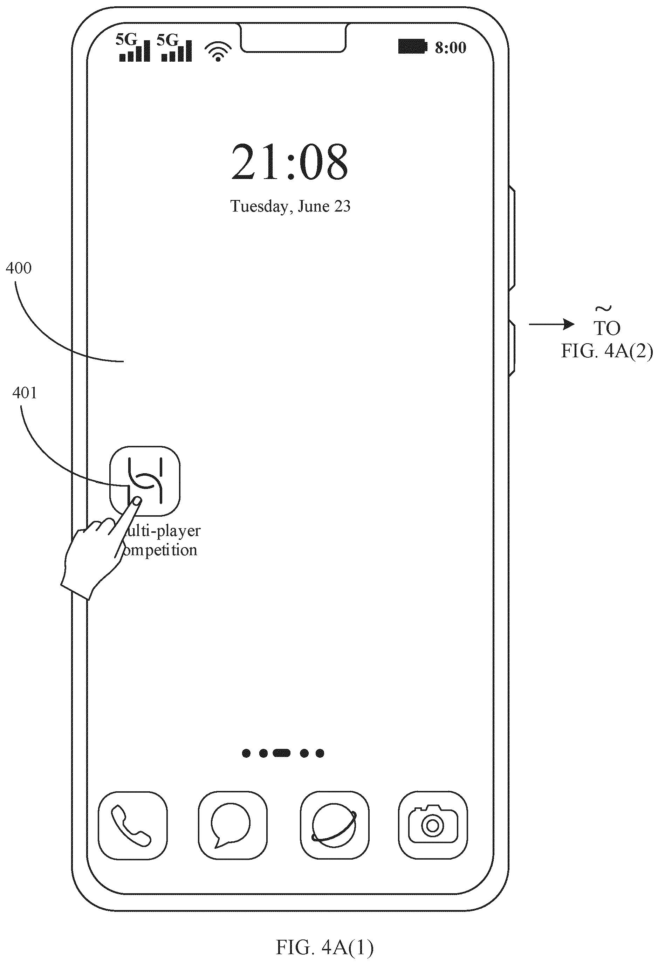

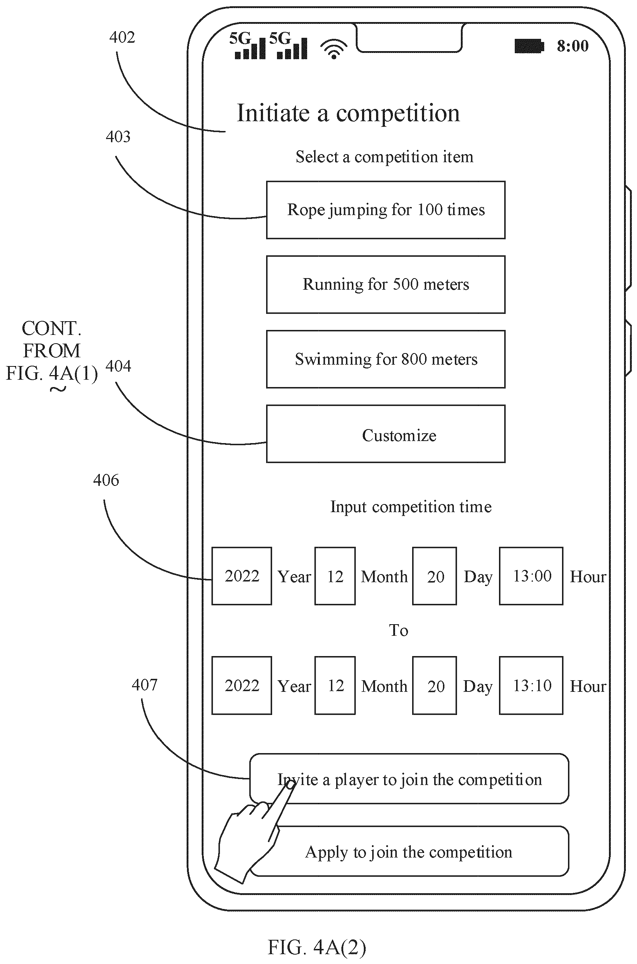

For example, refer to FIG. 4A(1) and FIG. 4A(2). A first device 400 starts a competition app 401 in response to an operation input by the user for indicating to start the competition app 401, and display a first application display interface 402 of the competition app 401. The first application display interface 402 may include a preset competition item 403, for example, rope jumping for 100 times, running for 500 meters, or swimming for 800 meters. The user may directly select the competition item 403. For example, the user selects the competition item of rope jumping for 100 times. The preset competition item 403 may be stored in the first device, or may be stored in a server that establishes a communication connection to the first device. When the competition item is stored in the server that establishes the communication connection to the first device, the first device may obtain the preset competition item 403 from the server and display the preset competition item 403.

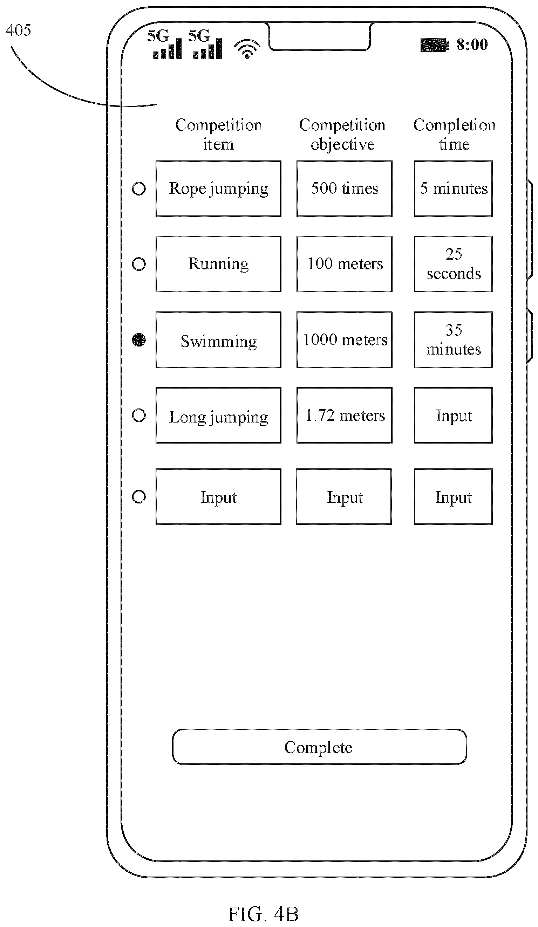

The first application display interface 402 may also include a setting control 404 used to customize a competition item. The user may perform a tap or selection operation on the setting control 404. The setting control 404 may display, in response to the tap or selection operation of the user, a competition item setting interface 405 shown in FIG. 4B. The user may set the competition item in the competition item setting interface 405. For example, the user sets the competition item to swimming for 1000 meters in the competition item setting interface.

The first application display interface 402 may further include an input box 406 used to set the competition time. The user may input the competition time in the input box 406, to set the competition time. The competition time may include start time of the competition. For example, the competition time is 13:00 on December 20, 2022. The competition time may alternatively include the start time and end time of the competition. For example, the competition time may be from 13:00 on December 20, 2022 to 13:10 on December 20, 2022.

Alternatively, the user may search the first application display interface 402 for the second device, and indicate the first device to send a first connection request to the at least one second device, to invite the corresponding second device to join the competition.

For example, still refer to FIG. 4A(1) and FIG. 4A(2). The first application display interface 402 may further include a first search control 407 used to search for the second device. The user may perform a tap or selection operation on the first search control 407. After detecting the tap or select operation of the user on the first search control 407, the first device 400 may search for the second device located in a preset range.

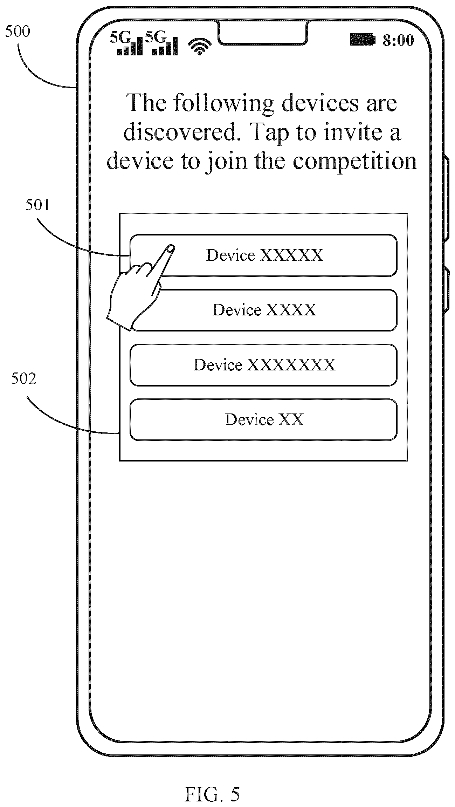

Refer to FIG. 5. After discovering at least one second device 501 located in the preset range, the first device 500 may display an interface including a first search list 502. The first search list 502 is used to display the at least one second device 501 discovered by the first device 500.

The user may perform a tap or select operation on one or more second devices 501 in the first search list 502. For example, the user performs a tap or select operation on the second device 501. The first device 500 sends a first connection request to the second device 501 in response to the tap or select operation of the user on the second device 501.

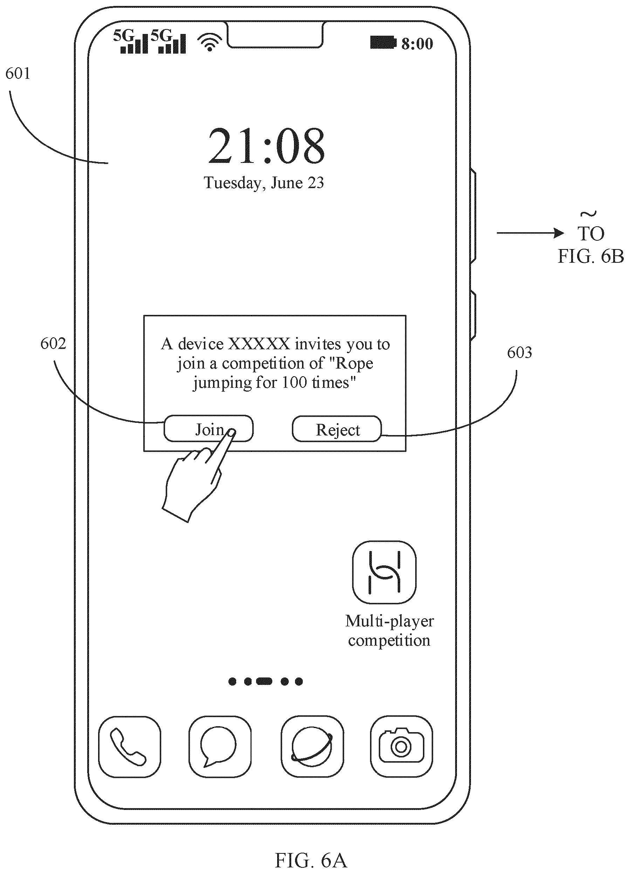

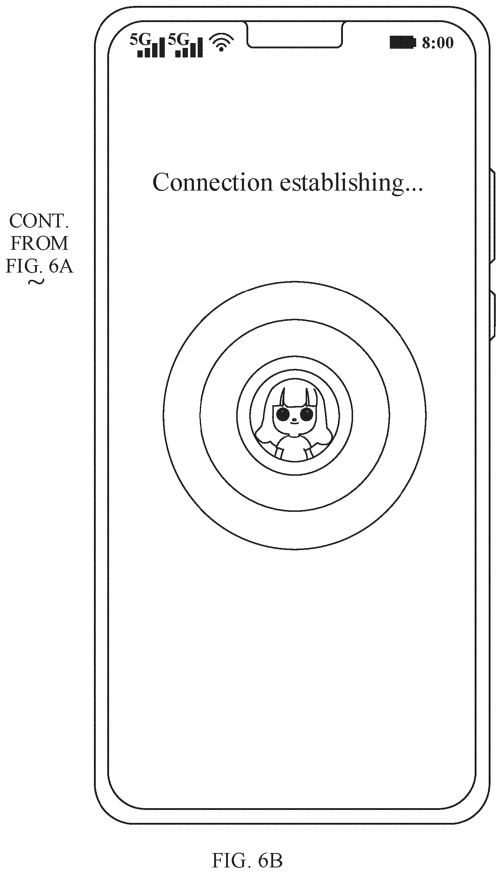

After receiving the first connection request sent by the first device, the second device may display a first connection interface 601 shown in FIG. 6A and FIG. 6B. The user may select a connection control 602 in the first connection interface 601, to send a connection instruction to the second device. The second device establishes a first communication connection to the first device in response to the connection instruction input by the user. Alternatively, the user may select a connection reject control 603 in the first connection interface 601, to send a connection reject instruction to the second device. The second device does not establish the first communication connection to the first device in response to the connection rejection instruction input by the user.

In some embodiments, as described in the foregoing embodiment, the second device may accept the first connection request sent by the first device, to establish the first communication connection to the first device, and join the competition initiated by the first device. Alternatively, the second device may actively search for an electronic device that creates a competition, and apply to the electronic device for joining the created competition. For example, the second device actively searches for the first device that creates the competition, and applies to join the competition created by the first device.

With reference to the accompanying drawings, the following describes in detail a process in which the second device applies to join the competition created by the first device.

The second device may start a competition app in response to an operation input by the user for indicating to start the competition app, and display a second application display interface of the competition app.

The user may search the second application display interface for the first device, and indicate the second device to send a second connection request to the first device, to request to join the competition created by the first device.

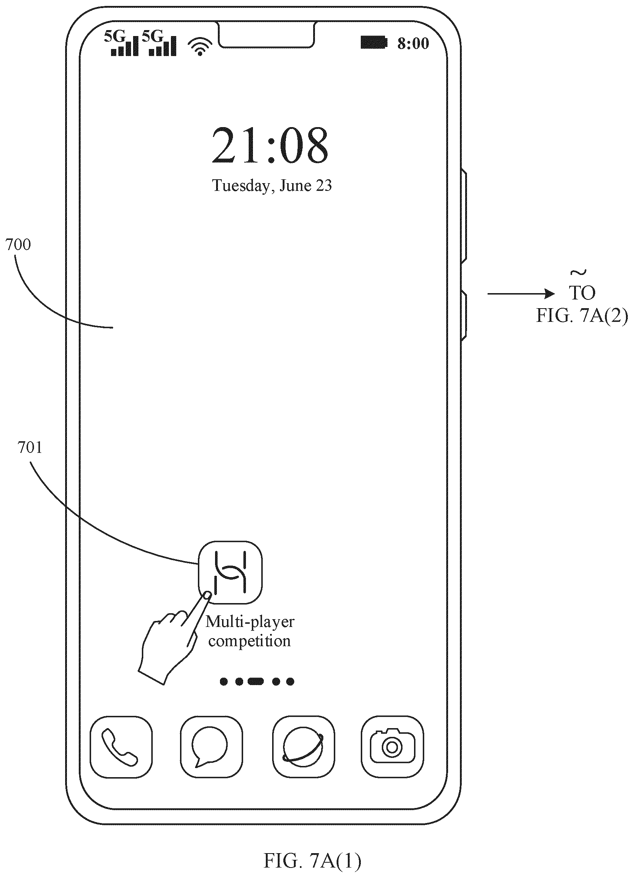

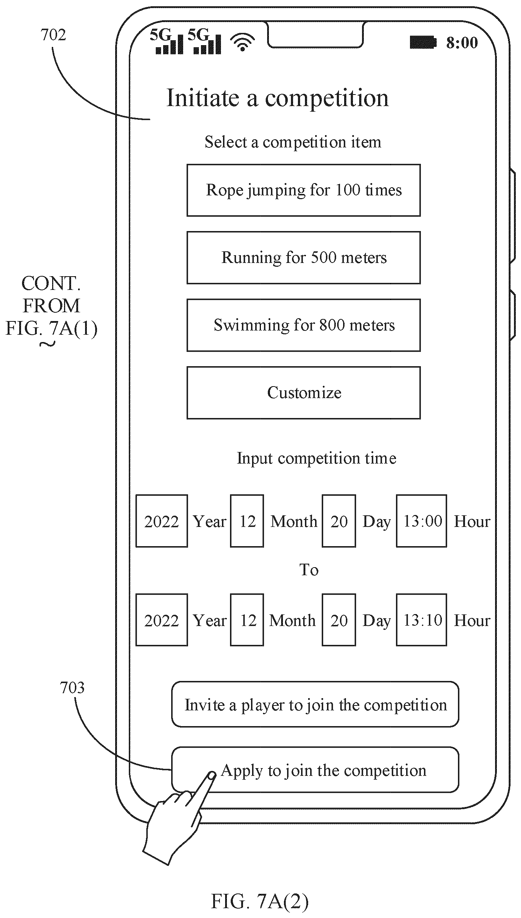

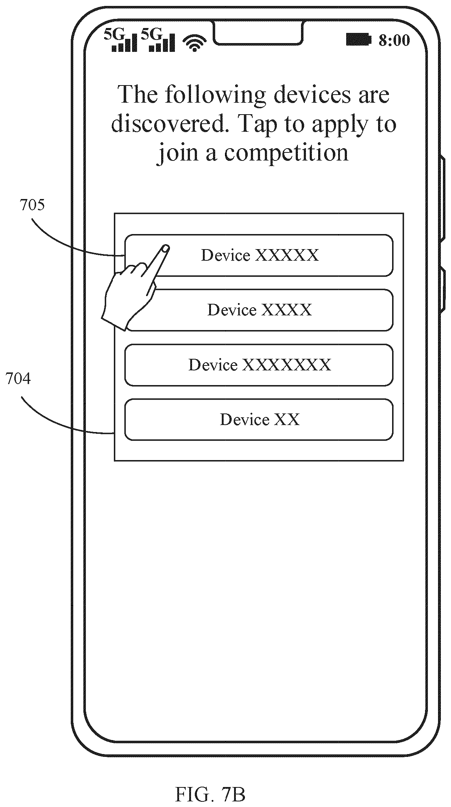

For example, refer to FIG. 7A(1) and FIG. 7A(2). A second device 700 starts a competition app 701 in response to an operation input by a user for indicating to start the competition app 701, and display a second application display interface 702 of the competition app 701. The second application display interface 702 may further include a second search control 703 used to search for a first device. The user may perform a tap or selection operation on the second search control 703. After detecting the tap or select operation of the user on the second search control 703, the second device 700 may search for the first device located in a preset range. After discovering at least one first device located in the preset range, the second device 700 may display a second search list 704 shown in FIG. 7B. The second search list 704 is used to display the at least one first device 705 discovered by the second device 700.

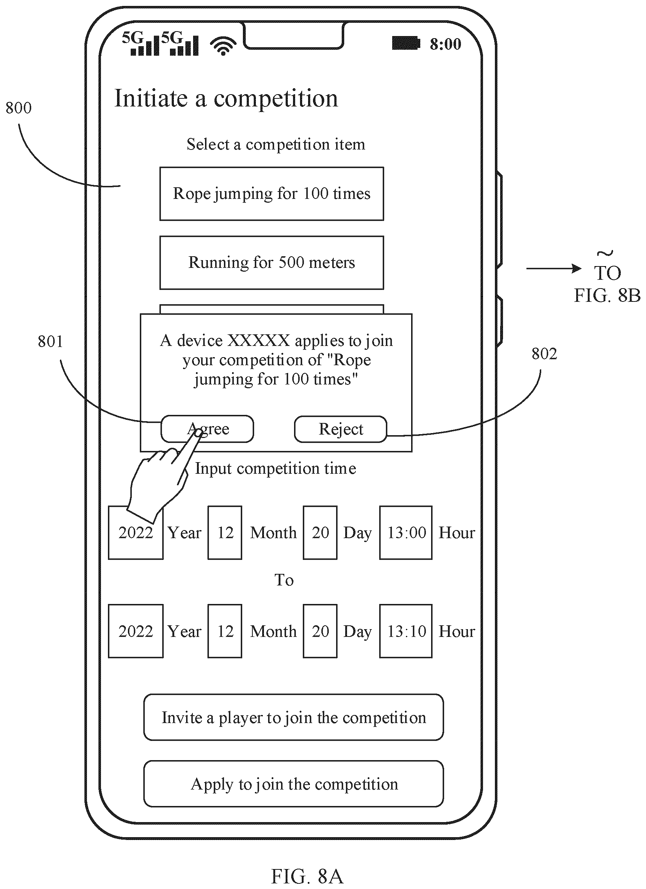

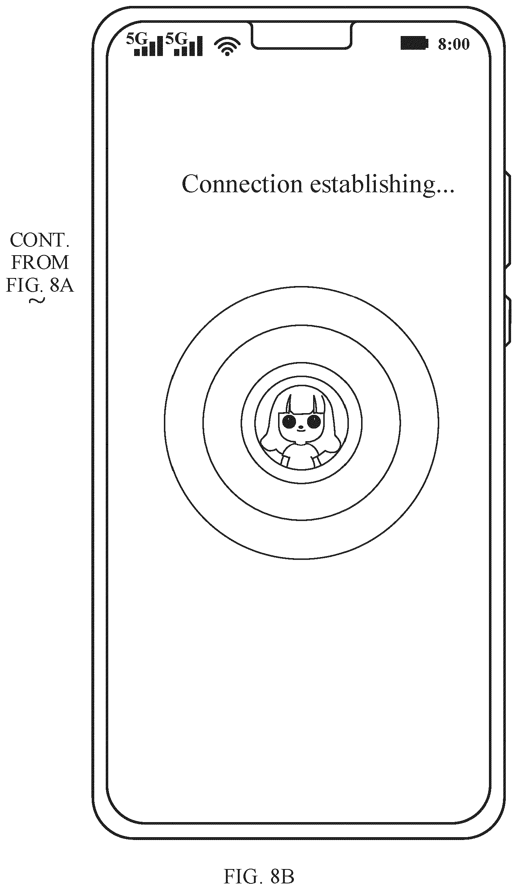

The user may perform a tap or select operation on any first device in the second search list. For example, the user performs the tap or select operation on the first device. The second device sends a second connection request to the first device in response to a tap or select operation of the user on the first device. After receiving the second connection request sent by the second device, the first device may display a second connection interface 800 shown in FIG. 8A and FIG. 8B. The user may select a connection control 801 in the second connection interface 800, to send a connection instruction to the first device. The first device establishes a first communication connection to the second device in response to the connection instruction input by the user. Alternatively, the user may select a connection reject control 802 in the second connection interface 800, to send a connection reject instruction to the first device. The first device does not establish the first communication connection to the second device in response to the connection rejection instruction input by the user.

Alternatively, the user may perform a tap or select operation on a plurality of first devices in the second search list. After detecting the tap or select operation of the user on the plurality of first devices, the second device may send the second connection request to all the first devices selected by the user. Then, the second device may establish the first communication connection to the first device that first agrees to the second connection request.

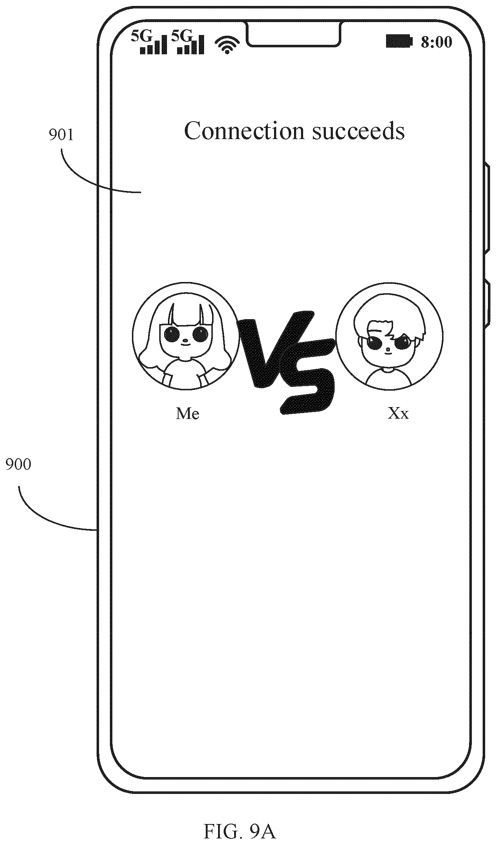

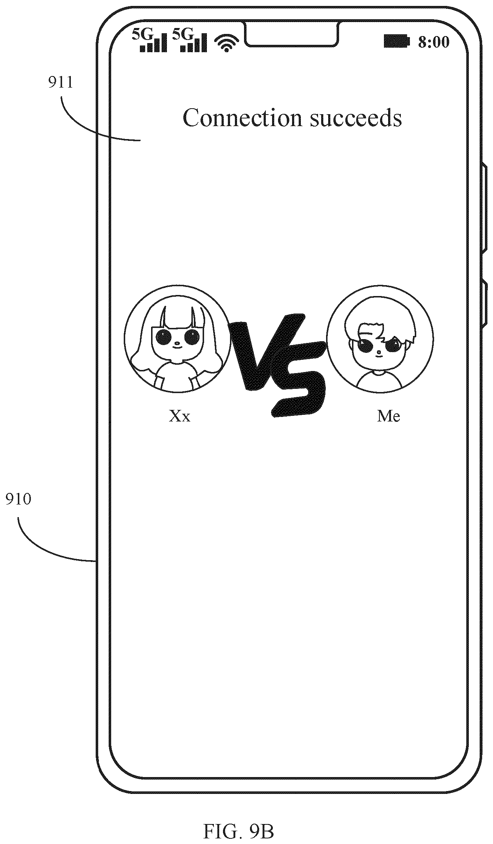

In some embodiments, after the first device successfully establishes the first communication connection to the second device, as shown in FIG. 9A and FIG. 9B, a first device 900 may display a first prompt interface 901. A second device 910 may display a second prompt interface 911. Both the first prompt interface 901 and the second prompt interface 911 are used to prompt the user that the first device 900 and the second device 910 successfully establish the first communication connection, and prepare to start the competition.

S302: The first device sends competition information to the second device.

The competition information includes a competition item, competition time, and the like.

For example, when the competition item is swimming for 800 meters, the competition time may include start time of the competition, for example, 13:00 on December 20, 2022. When the competition item is a quantity of rope jumping times within 10 minutes, the competition time may include start time of the competition and end time of the competition. For example, the start time is 13:00 on December 20, 2022, and the end time is 13:10 on December 20, 2022.

S303: The second device disconnects the first communication connection to the first device after receiving the competition information sent by the first device.

The second device disconnects the first communication connection to the first device after receiving the competition information sent by the first device, so that interaction between the first device and the second device during the user competition can be reduced. In addition, the second device disconnects the first communication connection to the first device, so that power consumption of the first device and the second device can be reduced.

S304: The first device detects first data based on the competition information.

The first data is competition data of a user who uses the first device.

In some embodiments, the first device may parse the competition information, and detect the first data based on the competition information.

For example, after parsing the competition information, the first device learns that the competition item is rope jumping for 100 times, and the competition time is 13:00 on December 20, 2022. The first device may detect, at 13:00 on December 20, 2022 based on the parsed competition information, time required for the user to complete rope jumping for 100 times. The time required for the user to complete rope jumping for 100 times is the first data.

For another example, after parsing the competition information, the first device learns that the competition item is a quantity of rope jumping times within 10 minutes, and the competition time is from 13:00 on December 20, 2022 to 13:10 on December 20, 2022. The first device may detect, based on the parsed competition information, the quantity of rope jumping times of the user in a time period from 13:00 on December 20, 2022 to 13:10 on December 20, 2022. The quantity of rope jumping times of the user is the first data.

For another example, after parsing the competition information, the first device learns that the competition item is swimming for 500 m within 10 minutes, and the competition time is from 13:00 on December 20, 2022 to 13:10 on December 20, 2022. The first device may detect, based on the parsed competition information, whether the user completes swimming for 500 meters within a time period from 13:00 on December 20, 2022 to 13:10 on December 20, 2022. Whether the user completes swimming for 500 meters is the first data.

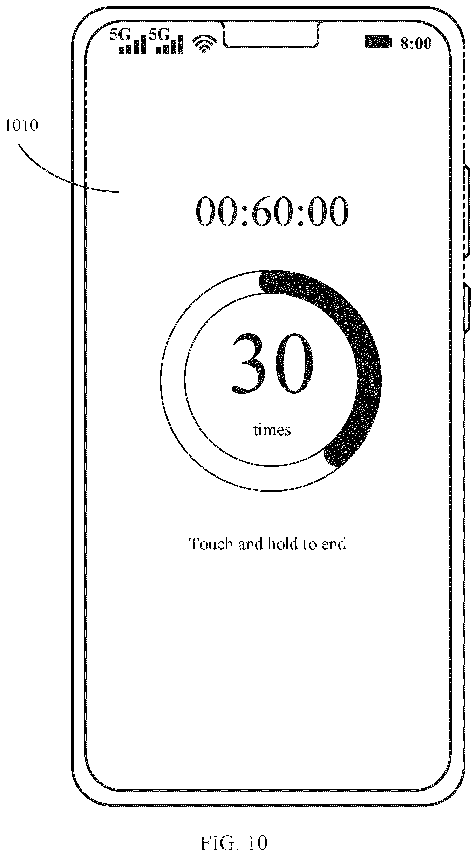

In some embodiments, when detecting the first data based on the competition information, the first device may display, in real time, an interface 1010 that includes the first data and that is shown in FIG. 10.

In some embodiments, after the first device obtains the complete first data, for the first device, the competition ends.

S305: The second device detects second data based on the competition information.

The second data is competition data of a user who uses the second device. For descriptions of the second data, refer to the descriptions of the first data in step S304 in the foregoing embodiment. Details are not described herein again.

In some embodiments, when detecting the second data based on the competition information, the second device may display, in real time, an interface including the second data.

In some embodiments, after the second device obtains the complete second data, for the second device, the competition ends.

S306: The first device sends the first data to a server.

A second communication connection is established between the first device and the server. The second communication connection is established after the first device obtains the first data. After obtaining the first data, the first device establishes the second communication connection to the server, so that interaction between the first device and the server during the user competition can be reduced. In addition, power consumption of the first device during the user competition can be further reduced.

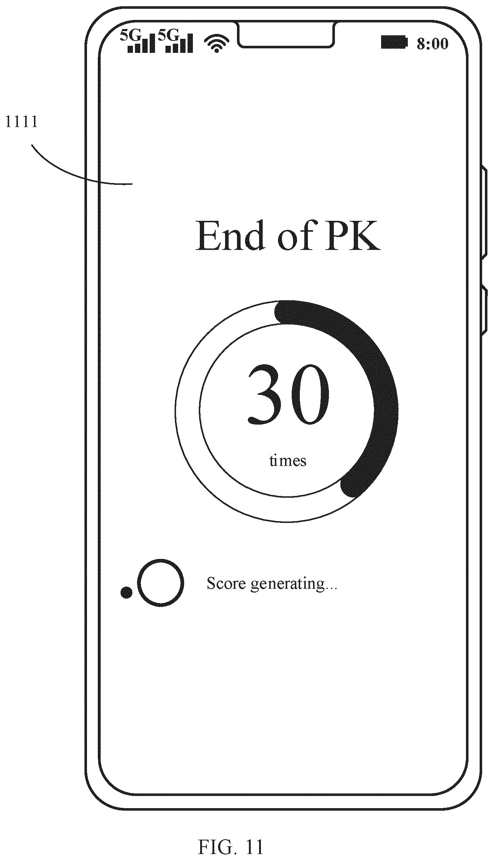

In some embodiments, after sending the first data to the server, the first device may display a first waiting interface 1111 shown in FIG. 11. The first waiting interface 1111 may be used to prompt the user that the server is obtaining a competition result.

S307: The second device sends the second data to the server.

A third communication connection is established between the second device and the server. The third communication connection is established after the second device obtains the second data. After obtaining the second data, the second device establishes the third communication connection to the server, so that interaction between the second device and the server during the user competition can be reduced. In addition, power consumption of the second device during the user competition can be further reduced.

In some embodiments, after sending the second data to the server, the second device may also display a second waiting interface. For descriptions of the second waiting interface, refer to the descriptions of the first waiting interface in the foregoing embodiment. Details are not described herein again.

S308: The server obtains the competition result based on the first data and the second data.

In some embodiments, after receiving the first data sent by the first device and the second data sent by the second device, the server may obtain the competition result based on the first data and the second data.

For example, the competition item is rope jumping for 100 times. The first data obtained by the first device is that it takes 2 minutes for the user to complete rope jumping for 100 times. The second data obtained by the second device is that it takes 1 minute and 30 seconds for the user to complete rope jumping for 100 times. After the server receives the first data sent by the first device and the second data sent by the second device, because 2 minutes is greater than 1 minute and 30 seconds, the competition result obtained by the server based on the first data and the second data is that the user using the second device wins.

For another example, the competition item is a quantity of rope jumping times within 10 minutes. The first data obtained by the first device is that the user completes rope jumping for 600 times within 10 minutes. The second data obtained by the second device is that the user completes rope jumping for 700 times within 10 minutes. After the server receives the first data sent by the first device and the second data sent by the second device, because 700 is greater than 600, the competition result obtained by the server based on the first data and the second data is that the user using the second device wins.

For another example, the competition item is swimming for 500 m within 10 minutes. The first data obtained by the first device is that the user completes swimming for 500 m within 10 minutes. The second data obtained by the second device is that the user completes swimming for 500 m within 10 minutes. After the server receives the first data sent by the first device and the second data sent by the second device, both the user who uses the first device and the user who uses the second device complete swimming for 500 m within 10 minutes. Therefore, the competition result obtained by the server based on the first data and the second data is a tie between the user using the first device and the user using the second device.

In some embodiments, the competition result may include a winning/losing status of each user in the foregoing embodiments. The competition result may further include the first data and the second data. The competition result may further include a competition ranking status, obtained based on the first data and the second data, of each user participating in the competition, and the like. This is not limited in this embodiment of this application.

S309: The server separately sends the competition result to the first device and the second device.

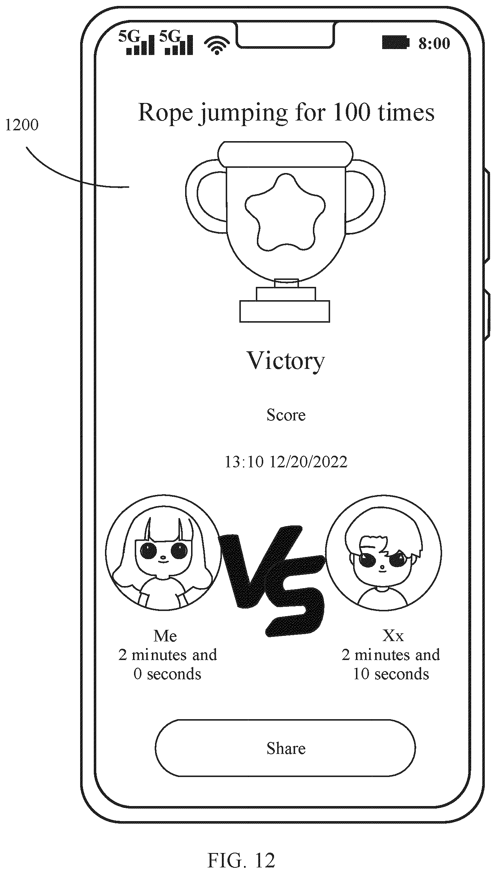

In some embodiments, after receiving the competition result sent by the server, the first device may display a settlement interface 1200 shown in FIG. 12. The settlement interface 1200 includes the competition result sent by the server. For example, the settlement interface 1200 includes a winning/losing status of the user who uses the first device; and/or the settlement interface includes the first data and the second data; and/or the settlement interface includes a competition ranking status of each user participating in the competition, and the like. This is not limited in this embodiment of this application.

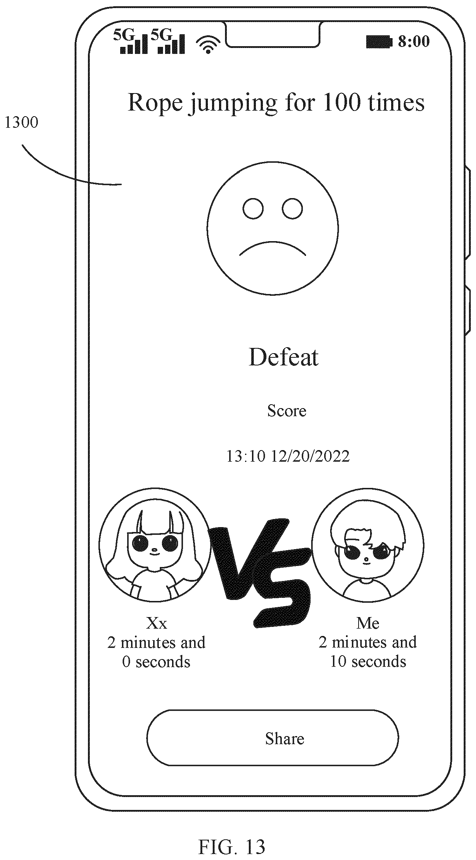

In some embodiments, after receiving the competition result sent by the server, the second device may also display a settlement interface 1300 shown in FIG. 13. The settlement interface 1300 includes the competition result sent by the server. For example, the settlement interface 1300 includes a winning/losing status of the user who uses the second device; and/or the settlement interface includes the first data and the second data; and/or the settlement interface includes a competition ranking status of each user participating in the competition, and the like. This is not limited in this embodiment of this application.

According to the multi-electronic device interaction method provided in this embodiment of this application, the first communication connection between the first device and the second device is retained only when the first device sends the competition information to the second device, thereby reducing power consumption of the first device and the second device in a user competition process. In addition, according to the multi-electronic device interaction method provided in this embodiment of this application, the first device and the second device are separately connected to the server only after the first device and the second device detect the first data and the second data. This does not depend on stability of communication connections between the first device and the second device and the server. In addition, the multi-electronic device interaction method provided in this embodiment of this application is applicable to a multi-player competition scenario. This improves user experience.

In some solutions, a plurality of embodiments of this application may be combined, and a combined solution is implemented. Optionally, some operations in procedures of the foregoing method embodiments are randomly combined, and/or a sequence of some operations is randomly changed. In addition, an execution sequence between steps of each procedure is merely an example, and does not constitute a limitation on an execution sequence between the steps. The steps may alternatively be performed in another execution sequence. It is not intended to indicate that the execution sequence is the only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

Moreover, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

It may be understood that, to implement the foregoing functions, the electronic device includes a corresponding hardware and/or software module for performing each function. With reference to the example algorithm steps described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module may be obtained through division based on each corresponding function, or two or more functions may be integrated into one processing module. The integrated module may be implemented in a form of hardware. It should be noted that, in this embodiment, module division is an example, and is merely logical function division. In actual implementation, another division manner may be used.

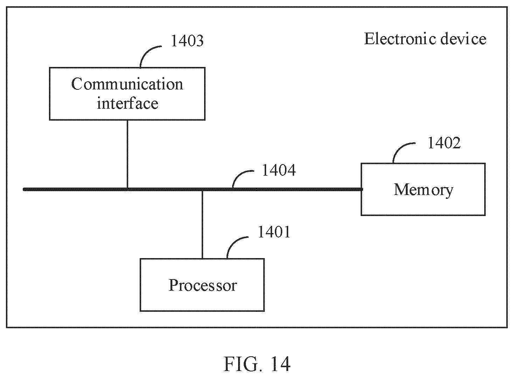

An embodiment of this application further provides an electronic device. As shown in FIG. 14, the electronic device may include one or more processors 1401, a memory 1402, and a communication interface 1403.

The memory 1402 and the communication interface 1403 are coupled to the processor 1401. For example, the memory 1402, the communication interface 1403, and the processor 1401 may be coupled together by using a bus 1404.

The communication interface 1403 is configured to perform data transmission with another device. The memory 1402 stores computer program code. The computer program code includes computer instructions. When the computer instructions are executed by the processor 1401, the electronic device is enabled to perform the multi-electronic device interaction method in embodiments of this application.

The processor 1401 may be a processor or a controller, like a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logical device, a transistor logical device, a hardware component, or any combination thereof. The processor may implement or execute various example logical blocks, modules, and circuits described with reference to content of this disclosure. The processor may be a combination of processors implementing a computing function, for example, a combination of one or more microprocessors, or a combination of the DSP and a microprocessor. The processor may be configured to support the electronic device to perform the method steps provided in the foregoing embodiments. For example, the processor may be configured to support the electronic device to perform the method steps provided in the foregoing embodiments. For example, the processor may be configured to support the electronic device to perform S301 to S309 in FIG. 3.

The bus 1404 may be a peripheral component interconnect (Peripheral Component Interconnect, PCI) bus, an extended industry standard architecture (Extended Industry Standard Architecture, EISA) bus, or the like. The bus 1404 may be classified as an address bus, a data bus, a control bus, and the like. For ease of representation, only one thick line is used to represent the bus in FIG. 14, but this does not mean that there is only one bus or only one type of bus.

The bus may be a peripheral component interconnect (Peripheral Component Interconnect, PCI) bus, an extended industry standard architecture (Extended Industry Standard Architecture, EISA) bus, or the like. The bus may be classified as an address bus, a data bus, a control bus, and the like. For ease of representation, only one thick line is used to represent the bus in the figure, but this does not mean that there is only one bus or only one type of bus.

An embodiment of this application further provides a chip system, including a processor, the processor is coupled to a memory, and the memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated on a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer storage medium stores computer program code. When the foregoing processor executes the computer program code, an electronic device performs related method steps in the foregoing method embodiments.

An embodiment of this application further provides a computer program product. When the computer program product runs on a computer, the computer is enabled to perform related method steps in the foregoing method embodiments.

In addition, an embodiment of this application further provides an apparatus. The apparatus may be specifically a component or a module, and the apparatus may include one or more connected processors and a memory. The memory is configured to store a computer program. When the computer program is executed by the one or more processors, the apparatus is enabled to perform the scenario configuration method in the foregoing method embodiments.

The apparatus, the computer-readable storage medium, the computer program product, or the chip provided in embodiments of this application is configured to perform the corresponding method provided above. Therefore, for beneficial effect that can be achieved, refer to beneficial effect in the corresponding method provided above, and details are not described herein again.

Methods or algorithm steps described in combination with the content disclosed in embodiments of this application may be implemented by hardware, or may be implemented by a processor by executing a software instruction. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division of the foregoing functional modules is used as merely an example for description. During actual application, the foregoing functions can be allocated to different functional modules for implementation based on a requirement. That is, an internal structure of the apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed apparatus and method may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed in different places. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions of embodiments of this application essentially, or the part making a contribution, or all or some of the technical solutions may be implemented in the form of software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A multi-electronic device interaction method, wherein the method comprises:
sending, by a first device, competition information to a second device through a first communication connection;
disconnecting, by the second device, the first communication connection to the first device after receiving the competition information sent by the first device;
detecting, by the first device, first data based on the competition information, and sending the first data to a server;
detecting, by the second device, second data based on the competition information, and sending the second data to the server;
receiving, by the server, the first data and the second data;
obtaining, by the server, a competition result based on the first data and the second data; and
separately sending, by the server, the competition result to the first device and the second device.

2. The method according to claim 1, wherein before the sending, by a first device, competition information to a second device through a first communication connection, the method further comprises:
receiving, by the first device, a first instruction input by a user, wherein the first instruction instructs the first device to send a first connection request to at least one second device, and the first connection request is used to request the second device to establish the first communication connection to the first device;
displaying, by the second device, a first connection interface in response to the received first connection request, wherein the first connection interface is used to prompt the user to agree to establish the first communication connection between the second device and the first device;
receiving, by the second device, a connection instruction input by the user; and
establishing, by the second device, the first communication connection to the first device in response to the connection instruction.

3. The method according to claim 1 or 2, wherein after the separately sending, by the server, the competition result to the first device and the second device, the method further comprises:
receiving, by the first device, the competition result sent by the server, and displaying a settlement interface comprising the competition result; and/or
receiving, by the second device, the competition result sent by the server, and displaying a settlement interface comprising the competition result.

4. The method according to any one of claims 1 to 3, wherein after the detecting, by the first device, first data based on the competition information, the method further comprises:
establishing, by the first device, a second communication connection to the server.

5. The method according to any one of claims 1 to 4, wherein after the detecting, by the second device, second data based on the competition information, the method further comprises:
establishing, by the second device, a third communication connection to the server.

6. The method according to any one of claims 1 to 5, wherein the first communication connection comprises at least one of a Bluetooth connection, an infrared connection, or a ZigBee communication connection.

7. The method according to any one of claims 1 to 6, wherein the competition information comprises at least one of a competition item and competition time, and the competition time comprises competition start time.

8. A multi-electronic device interaction method, applied to a first device, wherein the method comprises:
sending competition information to a second device through a first communication connection;
after disconnecting the first communication connection to the second device, detecting first data based on the competition information;
sending the first data to a server; and
receiving a competition result sent by the server, wherein the competition result is obtained by the server based on the first data and second data, and the second data is obtained by the second device through detection based on the competition information.

9. The method according to claim 8, wherein before the sending competition information to a second device through a first communication connection, the method further comprises:
receiving a first instruction input by a user, wherein the first instruction instructs the first device to send a first connection request to at least one second device, and the first connection request is used to request the second device to establish the first communication connection to the first device.

10. A multi-electronic device interaction method, applied to a second device, wherein the method comprises:
receiving competition information sent by a first device through a first communication connection;
disconnecting the first communication connection to the first device;
detecting second data based on the competition information, and sending the second data to a server; and
receiving a competition result sent by the server, wherein the competition result is obtained by the server based on first data and the second data, and the first data is obtained by the first device through detection based on the competition information.

11. The method according to claim 10, wherein before the receiving competition information sent by a first device through a first communication connection, the method further comprises:
receiving a first connection request sent by the first device, wherein the first connection request is used to request the second device to establish the first communication connection to the first device;
displaying a first connection interface in response to the first connection request, wherein the first connection interface is used to prompt a user to agree to establish the first communication connection between the second device and the first device;
receiving a connection instruction input by the user; and
establishing the first communication connection to the first device in response to the connection instruction.

12. A multi-electronic device interaction system, wherein the multi-electronic device interaction system comprises a first device, at least one second device, and a server; and the multi-electronic device interaction system is configured to perform the multi-electronic device interaction method according to any one of claims 1 to 7; or the multi-electronic device interaction system is configured to perform the multi-electronic device interaction method according to claim 8 or 9, or the multi-electronic device interaction system is configured to perform the multi-electronic device interaction method according to claim 10 or 11.

13. An electronic device, wherein the electronic device comprises a memory and one or more processors, the memory is coupled to the processor, the memory stores computer program code, and the computer program code comprises computer instructions; and when the computer instructions are executed by the processor, the electronic device is enabled to perform the multi-electronic device interaction method according to any one of claims 1 to 7; or the electronic device is configured to perform the multi-electronic device interaction method according to claim 8 or 9; or the electronic device is configured to perform the multi-electronic device interaction method according to claim 10 or 11.

14. A computer-readable storage medium, wherein the computer-readable storage medium stores instructions; and when the instructions are run on a computer, the computer is enabled to perform the multi-electronic device interaction method according to any one of claims 1 to 7; or the computer is configured to perform the multi-electronic device interaction method according to claim 8 or 9; or the computer is configured to perform the multi-electronic device interaction method according to claim 10 or 11.
